# EUROPEAN PATENT APPLICATION

(11) **EP 2 787 699 A1**
(43) Date of publication of application: **08.10.2014**
(21) Application number: 14161619.3
(22) Date of filing: 25.03.2014
(51) Int. Cl.: H04L 12/721

(54) **Data transmission method, device, and system**

(30) Priority: 01.04.2013 CN 201310111055
(71) Applicant: Huawei Technologies Co., Ltd., Shenzhen, Guangdong 518129 (CN)
(72) Inventor: Zhao, Lei, 518129 Shenzhen (CN); Liang, Xudong, 518129 Shenzhen (CN); Zhang, Xudong, 518129 Shenzhen (CN); Sun, Yongle, 518129 Shenzhen (CN)
(74) Representative: Haley, Stephen

(57) **Abstract**

Embodiments of the present invention provide a data transmission method, device, and system. The method includes: after a bit error occurs in each transmission path, obtaining a bit error rate of each transmission path; determining a sending cost of a corresponding transmission path according to the bit error rate of each transmission path; and selecting a transmission path according to the sending cost of each transmission path, to perform data transmission. In the data transmission method, device, and system provided by the embodiments of the present invention, in a situation where a bit error occurs in each data transmission path, a transmission path where a bit error occurs is not closed directly, instead, a data transmission path is selected preferentially according to different bit error degrees. Therefore, data transmission congestion is alleviated, and data transmission interruption is not easily caused.

## Description

### TECHNICAL FIELD

Embodiments of the present invention relate to the field of communications, and in particular, to a data transmission method, device, and system.

### BACKGROUND

In various communication networks, a network device, for example, a routing device or a host device, may select a transmission path preferentially according to transmission quality of each transmission path, so as to ensure reliability of data transmission.

In an Internet protocol radio access network (Internet Protocol Radio Access Network, IPRAN for short), after detecting that a bit error occurs in a current data transmission path, the routing device closes the current data transmission path, and reports an alarm to the host device. After the current data transmission path is closed, the routing device or the host device is triggered to re-select a transmission path without the bit error according to the Internal Gateway Protocol (Internal Gateway Protocol, IGP for short), to perform data transmission.

However, in a situation where the bit error occurs in each transmission path, all transmission paths are closed in the prior art, and all data traffic is switched to a standby transmission path. Therefore, data transmission may be congested and even interrupted.

### SUMMARY

Embodiments of the present invention provide a data transmission method, device, and system.

According to a first aspect, an embodiment of the present invention provides a data transmission method, including:
after a bit error occurs in each transmission path, obtaining a bit error rate of each transmission path; determining a sending cost of a corresponding transmission path according to the bit error rate of each transmission path; and selecting a transmission path according to the sending cost of each transmission path, to perform data transmission.

In a first possible implementation manner of the first aspect, the obtaining a bit error rate of each transmission path includes: detecting a first bit error rate of receiving data in each transmission path; receiving a second bit error rate sent by a peer device in each transmission path, where the second bit error rate is a bit error rate of receiving data by the peer device via each transmission path; and determining that a larger bit error rate of the first bit error rate and the second bit error rate of each transmission path is the bit error rate of each transmission path.

With reference to the first possible implementation manner of the first aspect, in a second possible implementation manner of the first aspect, the receiving a second bit error rate sent by a peer device in each transmission path includes: receiving the second bit error rate sent by the peer device in each transmission path by means of a bidirectional forwarding detection message.

With reference to the first aspect or one of the foregoing possible implementation manners of the first aspect, in a third possible implementation manner of the first aspect, the determining a sending cost of a corresponding transmission path according to the bit error rate of each transmission path includes: performing adjustment processing for the sending cost of each transmission path according to the bit error rate of each transmission path, and determining a sending cost of each transmission path after the bit error occurs; and the selecting a transmission path according to a sending cost of each transmission path, to perform data transmission includes: selecting a transmission path according to the sending cost of each transmission path after the bit error occurs, to perform data transmission.

With reference to the first aspect or one of the foregoing possible implementation manners of the first aspect, in a fourth possible implementation manner of the first aspect, the determining a sending cost of a corresponding transmission path according to the bit error rate of each transmission path includes: determining a first transmission path with a bit error rate greater than a first threshold and a second transmission path with a bit error rate less than or equal to the first threshold among the transmission paths; performing adjustment processing for a sending cost of the first transmission path, determining a sending cost of the first transmission path after the bit error occurs, and taking a sending cost of the second transmission path before the bit error occurs as a sending cost of the second transmission path after the bit error occurs; and the selecting a transmission path according to the sending cost of each transmission path, to perform data transmission includes: selecting a transmission path according to the sending cost of each transmission path after the bit error occurs, to perform data transmission.

With reference to the third or fourth possible implementation manner of the first aspect, in a fifth possible implementation manner of the first aspect, the adjustment processing for the sending cost includes: determining a sending cost adjustment amount corresponding to a bit error rate of a transmission path according to a mapping relationship between the bit error rate and the sending cost adjustment amount; and determining a sending cost of the transmission path after the bit error occurs according to a sending cost of the transmission path before the bit error occurs and the sending cost adjustment amount of the transmission path.

With reference to the first aspect or one of the foregoing five possible implementation manners of the first aspect, in a sixth possible implementation manner of the first aspect, after the obtaining a bit error rate of each transmission path, the method further includes: closing a transmission path with a bit error rate greater than a second threshold among the transmission paths; and the determining a sending cost of a corresponding transmission path according to the bit error rate of each transmission path includes: determining the sending cost of a corresponding transmission path according to a bit error rate of a transmission path which is in an ON state.

According to a second aspect, an embodiment of the present invention provides a data transmission device, including:
an obtaining module, configured to: after a bit error occurs in each transmission path, obtain a bit error rate of each transmission path; a determining module, configured to determine a sending cost of a corresponding transmission path according to the bit error rate of each transmission path; and a selecting module, configured to select a transmission path according to the sending cost of each transmission path, to perform data transmission.

In a first possible implementation manner of the second aspect, the obtaining module includes: a detecting unit, configured to detect a first bit error rate of receiving data in each transmission path; a receiving unit, configured to receive a second bit error rate sent by a peer device in each transmission path, where the second bit error rate is a bit error rate of receiving data by the peer device via each transmission path; and a determining unit, configured to determine that a larger bit error rate of the first bit error rate and the second bit error rate of each transmission path is the bit error rate of each transmission path.

With reference to the first possible implementation manner of the second aspect, in a second possible implementation manner of the second aspect, the receiving unit is specifically configured to receive the second bit error rate sent by the peer device in each transmission path by means of a bidirectional forwarding detection message.

With reference to the second aspect or one of the foregoing possible implementation manners of the second aspect, in a third possible implementation manner of the second aspect, the determining module is specifically configured to perform adjustment processing for a sending cost of each transmission path according to the bit error rate of each transmission path, and determine the sending cost of each transmission path after the bit error occurs; and the selecting module is specifically configured to select a transmission path according to the sending cost of each transmission path after the bit error occurs, to perform data transmission.

With reference to the second aspect or one of the foregoing possible implementation manners of the second aspect, in a fourth possible implementation manner of the second aspect, the determining module is specifically configured to determine a first transmission path with a bit error rate greater than a first threshold and a second transmission path with a bit error rate less than or equal to the first threshold among the transmission paths; perform adjustment processing for a sending cost of the first transmission path, determine a sending cost of the first transmission path after the bit error occurs, and take a sending cost of the second transmission path before the bit error occurs as a sending cost of the second transmission path after the bit error occurs; and the selecting module is specifically configured to select a transmission path according to the sending cost of each transmission path after the bit error occurs, to perform data transmission.

With reference to the third or fourth possible implementation manner of the second aspect, in a fifth possible implementation manner of the second aspect, the determining module is specifically configured to determine a sending cost adjustment amount corresponding to a bit error rate of a transmission path according to a mapping relationship between the bit error rate and the sending cost adjustment amount; and determine a sending cost of the transmission path after the bit error occurs according to a sending cost of the transmission path before the bit error occurs and the sending cost adjustment amount of the transmission path.

With reference to the second aspect or one of the foregoing five possible implementation manners of the second aspect, in a sixth possible implementation manner of the second aspect, the device further includes: a transmission path closing module, configured to: after the obtaining module obtains the bit error rate of each transmission path, close a transmission path with a bit error rate greater than a second threshold among the transmission paths; and the determining module is specifically configured to determine the sending cost of a corresponding transmission path according to a bit error rate of a transmission path which is in an ON state.

According to a third aspect, an embodiment of the present invention provides a data transmission system, including:
at least two data transmission devices that communicate with each other, where at least one data transmission device is the data transmission device described in any one of the possible implementation manners in the second aspect.

In the data transmission method, device, and system provided by the embodiments of the present invention, in a situation where a bit error occurs in each data transmission path, a transmission path where a bit error occurs is not closed directly, instead, a data transmission path is selected preferentially according to different bit error degrees. Therefore, data transmission congestion is alleviated, and data transmission interruption is not easily caused.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a flowchart of Embodiment 1 of a data transmission method according to of the present invention;
FIG. 2 is a schematic diagram of Embodiment 2 of a data transmission method according to the present invention;
FIG. 3 is a schematic diagram of Embodiment 3 of a data transmission method according to the present invention;
FIG. 4 is a schematic structural diagram of an embodiment of a data transmission device according to the present invention; and
FIG. 5 is a schematic structural diagram of another embodiment of a data transmission device according to the present invention.

### DESCRIPTION OF EMBODIMENTS

To make the objectives, technical solutions, and advantages of the embodiments of the present invention more clear, the following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by persons of ordinary skill in the art based on the embodiments of the present invention without creative efforts shall fall within the protection scope of the present invention.

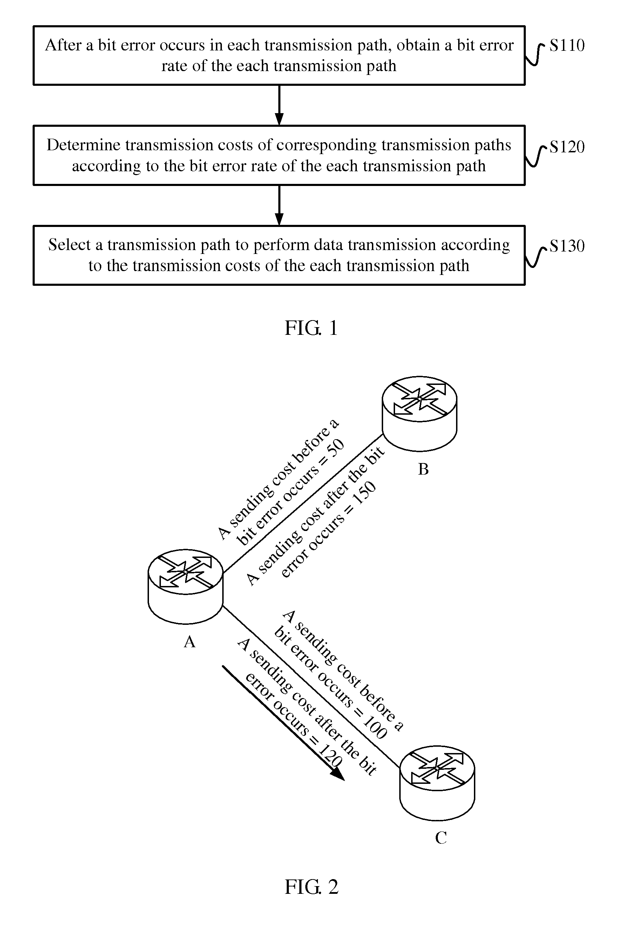

FIG. 1 is a flowchart of Embodiment 1 of a data transmission method according to of the present invention. As shown in FIG. 1, in this embodiment, the data transmission method provided by the embodiment of the present invention is described by taking a routing device as an execution body. The data transmission method provided by this embodiment may include:
S110: After a bit error occurs in each transmission path, obtain a bit error rate of each transmission path.

A same routing device may be connected to multiple transmission paths. In the prior art, when learning that a bit error occurs in a certain transmission path connected to the routing device, the routing device directly closes the transmission path where the bit error occurs; and when the bit error occurs in all transmission paths connected to the routing device, the routing device closes all transmission paths. However, in the embodiment of the present invention, after learning that the bit error occurs in all the transmission paths, the routing device does not directly close the transmission paths. The routing device may firstly obtain specific bit error rates of the transmission paths, and then selects a transmission path according to the bit error rates, to perform data transmission.

S120: Determine a sending cost of a corresponding transmission path according to the bit error rate of the each transmission path.

The routing device may reflect the bit error rate of the each transmission path in the sending costs (cost) used for selecting a transmission path.

S130: Select a transmission path according to the sending cost of the each transmission path, to perform data transmission.

The routing device selects a transmission path according to the sending cost of the each transmission path to perform data transmission, where the sending cost includes a factor of a bit error rate,.

In the data transmission method provided by this embodiment, in a situation where the bit error occurs in each data transmission path, a transmission path where a bit error occurs is not closed directly, instead, a data transmission path is selected preferentially according to different bit error degrees of the each data transmission path. Therefore, data transmission congestion is alleviated, and data transmission interruption is not easily caused.

Further, in the foregoing S120, for determining the sending cost of the corresponding transmission path according to the bit error rate of the each transmission path, two specific implementation manners may be used:
Manner 1: perform adjustment processing for a sending cost of the each transmission path according to the bit error rate of the each transmission path, and determine the sending cost of the each transmission path after the bit error occurs.

Specifically, after obtaining the bit error rate of the each transmission path, the routing device may perform adjustment processing for the sending cost of the each transmission path according to the bit error rate of the each transmission path, and obtain the sending cost of the each transmission path after the bit error occurs.

Manner 2: determine a first transmission path with a bit error rate greater than a first threshold and a second transmission path with a bit error rate less than or equal to the first threshold; perform adjustment processing for a sending cost of the first transmission path, determine a sending cost of the transmission path after the bit error occurs, and take a sending cost of the second transmission path before the bit error occurs as a sending cost of the second transmission path after the bit error occurs.

Specifically, after obtaining the bit error rate of the each transmission path, the routing device may firstly determine whether the bit error rate is greater than the preset first threshold, so as to perform adjustment processing for a sending cost only for a transmission path with a bit error rate greater than the first threshold. Compared with the foregoing implementation manner 1, in this manner, an effect caused by a bit error rate is considered in a sending cost of a transmission path only in a situation where the bit error rate is greater than the first threshold, thereby saving a resource occupied for adjusting the sending cost.

Corresponding to the foregoing manner 1 or manner 2, the foregoing S130 may specifically be: selecting a transmission path according to the sending cost of the each transmission path after the bit error occurs, to perform data transmission.

In a possible implementation manner, in the foregoing manner 1 or manner 2, the adjustment processing for the sending cost may include:
determining a sending cost adjustment amount corresponding to a bit error rate of a transmission path according to a mapping relationship between the bit error rate and the sending cost adjustment amount value; and determining a sending cost of the transmission path after the bit error occurs according to a sending cost of the transmission path before the bit error occurs and the sending cost adjustment amount of the transmission path.

Specifically, a mapping relationship may be preset, and the mapping relationship reflects a mapping relationship between a bit error rate and a sending cost adjustment amount. For example, a mapping table between a bit error rate of the each transmission path connected to the routing device and a sending cost adjustment amount of the each transmission path is set in the routing device. For example, when the bit error rate is in an order of magnitude of 10⁻⁴, the sending cost adjustment amount is 100; and when the bit error rate is in an order of magnitude of 10⁻³, the sending cost adjustment amount is 500, and the like. After obtaining the bit error rate of the each transmission path, the routing device may determine a sending cost adjustment amount corresponding to the bit error rate of each transmission path according to the mapping table, and determine that, a sending cost of a transmission path after the bit error occurs = a sending cost before the bit error occurs + a sending cost adjustment amount. A specific format of the mapping relationship between a bit error rate and a sending cost adjustment amount is not limited in the embodiment of the present invention.

The technical solution of the foregoing embodiment is described in detail by adopting two specific embodiments.

FIG. 2 is a schematic diagram of Embodiment 2 of a data transmission method according to the present invention, and the technical solution of this embodiment corresponds to an implementation process of the foregoing manner 1. As shown in FIG. 2, a routing device A is connected to a routing device B via a transmission path AB, and the routing device A is connected to a routing device C via a transmission path AC. In a situation where neither the transmission path AB nor the transmission path AC has a bit error, the routing device A may select a transmission path according to the sending costs of the transmission paths, to perform data transmission. For example, a sending cost (cost), of the transmission path AB before the bit error occurs and used for data transmission before the bit error occurs, is 50, while a sending cost of the transmission path AC before the bit error occurs is 100, and then the routing device A may select the transmission path AB with the smaller sending cost before the bit error occurs to transmit data in a situation where neither the transmission path AB nor the transmission path AC has the bit error.

After the bit error occurs in both the transmission path AB and the transmission path AC, the routing device A may obtain bit error rates of the transmission path AB and the transmission path AC, for example, the bit error rate of the transmission path AB is 10⁻⁴, and the bit error rate of the transmission path AC is 10⁻⁵.

The routing device A obtaining the bit error rate of the transmission path AB in the embodiment provided in FIG. 2 is used as an example, the routing device A may detect a first bit error rate, for example, 10⁻⁵, for receiving data via the transmission path AB; and the routing device A further receives a second bit error rate sent by an peer device on the transmission path AB, namely, the routing device B, where the second bit error rate is a bit error rate, for example, 10⁻⁴, for receiving data by the routing device B via the transmission path AB. Then, the routing device may determine that the larger bit error rate in the first bit error rate and the second bit error rate, namely, the second bit error rate 10⁻⁴, is the bit error rate of the transmission path AB. The routing device B may send the second bit error rate to the routing device A by means of a bidirectional forwarding detection (Bidirectional Forwarding Detection, BFD for short hereinafter) message. The routing device B may also send the second bit error rate to the routing device A in another manner, which is not limited in the embodiment of the present invention.

Then, the routing device A may firstly determine a sending cost adjustment amount corresponding to the bit error rate of each transmission path according to obtained bit error rates and the mapping relationship between a bit error rate and a sending cost adjustment amount.

For example, a sending cost adjustment amount corresponding to the bit error rate10⁻⁴ of the transmission path AB is 100, and then, a sending cost of the transmission path AB after the bit error occurs = the sending cost before the bit error occurs + the sending cost adjustment amount = 50 + 100 = 150. Similarly, a sending cost adjustment amount corresponding to the bit error rate 10⁻⁵ of the transmission path AC is 20, and then, a sending cost of the transmission path AC after the bit error occurs = the sending cost before the bit error occurs + the sending cost adjustment amount = 100 + 20 = 120.

It can be seen that, the sending cost of the transmission path AB after the bit error occurs is greater than the sending cost of the transmission path AC after the bit error occurs, and the routing device A selects the transmission path AC to perform data transmission.

If a load pressure is large when data transmission is performed only via the transmission path AC with the smaller sending cost after the bit error occurs, the routing device may perform traffic distribution for a transmission task to the transmission path AB, where a traffic distribution policy may be preset as required. Therefore, data transmission congestion can be alleviated, and transmission efficiency can be improved.

In the embodiment of the data transmission method shown in FIG. 2, the data transmission method provided by the embodiment of the present invention is described only by using two transmission paths connected to the routing device A as an example, and the data transmission method provided by the embodiment of the present invention is still applicable to a situation where a routing device is connected to more than two transmission paths.

In the data transmission method provided by this embodiment, in a situation where a bit error occurs in each data transmission path, a transmission path where the bit error occurs is not closed directly, instead, a sending cost of each data transmission path is adjusted according to different bit error degrees of each data transmission path, so that a data transmission path is selected preferentially by using adjusted sending costs. Therefore, data transmission congestion is alleviated, and data transmission interruption is not easily caused.

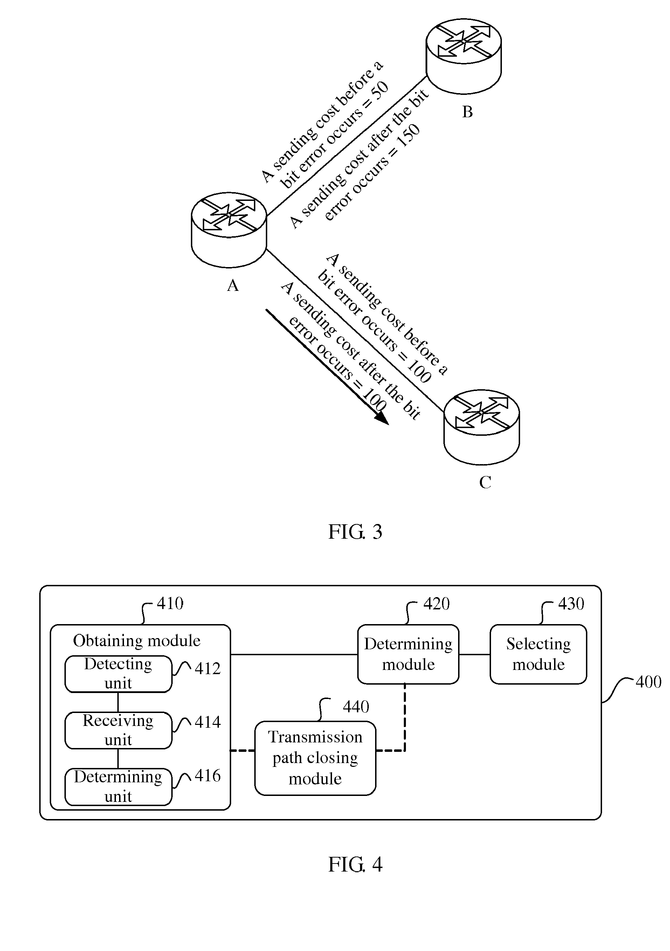

FIG. 3 is a schematic diagram of Embodiment 3 of a data transmission method according to the present invention, and the technical solution of this embodiment corresponds to an implementation process of the foregoing manner 2. As shown in FIG. 3, a routing device A is connected to a routing device B via a transmission path AB, and the routing device A is connected to a routing device C via a transmission path AC. In a situation where neither the transmission path AB nor the transmission path AC has a bit error, the routing device A may select a transmission path according to sending costs of the transmission paths, to perform data transmission. For example, a sending cost (cost), of the transmission path AB before the bit error occurs and used for data transmission before the bit error occurs, is 50, while a sending cost of the transmission path AC before the bit error occurs is 100, and then the routing device A may select the transmission path AB with the smaller sending cost before the bit error occurs to transmit data in a situation where neither the transmission path AB nor the transmission path AC has the bit error.

After a bit error occurs in both the transmission path AB and the transmission path, the routing device A may obtain bit error rates of the transmission path AB and the transmission path AC, for example, a bit error rate of the transmission path AB is 10⁻⁴, and a bit error rate of the transmission path AC is 10⁻⁵.

The routing device A obtaining the bit error rate of the transmission path AB in the embodiment provided in FIG. 3 is used as an example, the routing device A may detect a first bit error rate, for example, 10⁻⁵, for receiving data via the transmission path AB; and the routing device A further receives a second bit error rate sent by an peer device on the transmission path AB, namely, the routing device B, where the second bit error rate is a bit error rate, for example, 10⁻⁴, for receiving data by the routing device B via the transmission path AB. Then, the routing device may determine that the larger bit error rate in the first bit error rate and the second bit error rate, namely, the second bit error rate 10⁻⁴, is the bit error rate of the transmission path AB. The routing device B may send the second bit error rate to the routing device A through a BFD message. The routing device B may also send the second bit error rate to the routing device A in another manner, which is not limited in the embodiment of the present invention.

Then, the routing device A may firstly determine a sending cost adjustment amount corresponding to the bit error rate of each transmission path according to obtained bit error rates and the mapping relationship between a bit error rate and a sending cost adjustment amount.

Assuming that the first threshold is 10⁻⁵, then the routing device may determine that the transmission path AB is the first transmission path (the bit error rate is greater than the first threshold), and that the transmission path AC is the second transmission path (the bit error rate is equal to the first threshold). The routing device A performs adjustment processing for the sending cost of the first transmission path, namely, the transmission path AB, and determines, according to the obtained bit error rate and the mapping relationship between a bit error rate and a sending cost adjustment amount, that a sending cost adjustment amount corresponding to the bit error rate 10⁻⁴ of the transmission path AB is 100, and determines that a sending cost of the transmission path AB after the bit error occurs = the sending cost before the bit error occurs + the sending cost adjustment amount = 50 + 100 = 150. The routing device A does not perform adjustment processing for the sending cost of the second transmission path, namely, the transmission path AC, and a sending cost of the transmission path AC after the bit error occurs = the sending cost before the bit error occurs = 100. The sending cost of the transmission path AB after the bit error occurs is greater than the sending cost of the transmission path AC after the bit error occurs, and the routing device A selects the transmission path AC to perform data transmission. That is to say, an effect brought by a bit error rate is considered in a sending cost only in a situation where the bit error rate of a transmission path is greater than a set first threshold.

Similarly, if a load pressure is large when data transmission is performed only via the transmission path AC with the smaller sending cost after the bit error occurs, the routing device may perform traffic distribution for a transmission task to the transmission path AB, where a traffic distribution policy may be preset as required. Therefore, data transmission congestion can be alleviated, and transmission efficiency can be improved.

In the embodiment of the data transmission method shown in FIG. 3, the data transmission method provided by the embodiment of the present invention is described only by using two transmission paths connected to the routing device A as an example, and the data transmission method provided by the embodiment of the present invention is still applicable to a situation where a routing device is connected to more than two transmission paths.

In the data transmission method provided by this embodiment, in a situation where a bit error occurs in each data transmission path, a transmission path where a bit error occurs is not closed directly, instead, bidirectional bit error rates of the transmission path are comprehensively considered, and a sending cost of the data transmission path may be flexibly adjusted according to a size of a bit error rate, so that a data transmission path is selected preferentially by using an adjusted sending cost. Therefore, data transmission congestion is alleviated, and data transmission interruption is not easily caused.

In the foregoing two specific embodiments, a transmission path which has a smaller sending cost after being affected by a bit error is selected from transmission paths where the bit error occurs, to perform data transmission. In the implementation manner 1, an effect brought by a bit error rate of a transmission path is directly considered in a sending cost of the transmission path. In the implementation manner 2, an effect brought by a bit error rate is considered in a sending cost of a transmission path only in a situation where the bit error rate of the transmission path is greater than a first threshold. Therefore, compared with the implementation manner 1, a resource occupied for adjusting the sending cost is saved, but relative to the implementation manner 2, the implementation manner 1 is more accurate in adjusting the sending cost of the transmission path.

In another possible implementation manner, after the bit error rate of each transmission path is obtained, a transmission path with a bit error rate greater than a second threshold among the transmission paths may be closed firstly, and a sending cost of a corresponding transmission path is determined only according to a bit error rate of a transmission path which is in an ON state. In short, the second threshold may further be set on the basis of the foregoing embodiment. That is, in a situation where a bit error rate of a transmission path is greater than the second threshold, the transmission path is no longer used to perform data transmission, thereby ensuring transmission quality of the transmission path.

FIG. 4 is a schematic structural diagram of an embodiment of a data transmission device according to the present invention. As shown in FIG. 4, a data transmission device 400 provided by this embodiment may be disposed in a routing device, or may be a routing device itself. The data transmission device 400 may include: an obtaining module 410, a determining module 420, a selecting module 430 and a transmission path closing module 440, and specifically:
the obtaining module 410 may be configured to obtain a bit error rate of each transmission path after a bit error occurs in each transmission path;
the determining module 420 may be configured to determine a sending cost of a corresponding transmission path according to the bit error rate of the each transmission path; and
the selecting module 430 may be configured to select a transmission path according to the sending cost of the each transmission path, to perform data transmission.

Further, the obtaining module 410 may include: a detecting unit 412, may be configured to detect a first bit error rate of receiving data in each transmission path; a receiving unit 414, may be configured to receive a second bit error rate sent by a peer device in each transmission path, where the second bit error rate is a bit error rate of receiving data by the peer device via the each transmission path; and a determining unit 416, may be configured to determine that a larger bit error rate of the first bit error rate and the second bit error rate of the each transmission path is the bit error rate of the each transmission path.

Further, the receiving unit 414 may be specifically configured to receive the second bit error rate sent by the peer device in the each transmission path by means of a bidirectional forwarding detection message.

Further, the determining module 420 may be specifically configured to perform adjustment processing for a sending cost of the each transmission path according to the bit error rate of the each transmission path, and determine the sending cost of each transmission path after the bit error occurs. The selecting module 430 may be specifically configured to select a transmission path according to the sending cost of the each transmission path after the bit error occurs, to perform data transmission.

Further, the determining module 420 may be specifically configured to determine a first transmission path with a bit error rate greater than a first threshold and a second transmission path with a bit error rate less than or equal to the first threshold; perform adjustment processing for a sending cost of the first transmission path, determine a sending cost of the transmission path after the bit error occurs, and take a sending cost of the second transmission path before the bit error occurs as a sending cost of the second transmission path after the bit error occurs. The selecting module 430 may be specifically configured to select a transmission path according to the sending cost of the each transmission path after the bit error occurs, to perform data transmission.

Further, the determining module 420 may be specifically configured to determine a sending cost adjustment amount corresponding to a bit error rate of a transmission path according to a mapping relationship between the bit error rate and the sending cost adjustment amount; and determine a sending cost of the transmission path after the bit error occurs according to a sending cost of the transmission path before the bit error occurs and the sending cost adjustment amount of the transmission path.

Further, the transmission path closing module 440 may be configured to close a transmission path with a bit error rate greater than a second threshold among the transmission paths after the obtaining module 410 obtains the bit error rate of each transmission path. The determining module 420 is specifically configured to determine the sending cost of a corresponding transmission path according to a bit error rate of a transmission path which is in an ON state.

The data transmission device 400 provided by this embodiment may be used to execute the technical solution of the method embodiment shown in FIG. 1, FIG. 2, or FIG. 3, and implementation principles and technical effects thereof are similar, and details will not be described herein again.

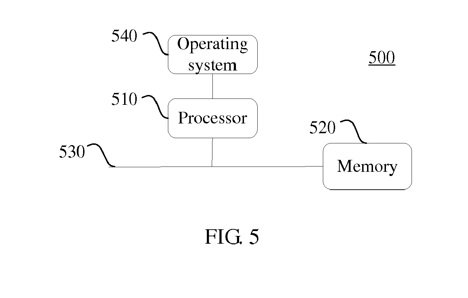

FIG. 5 is a schematic structural diagram of another embodiment of a data transmission device according to the present invention. As shown in FIG. 5, a data transmission device 500 provided by this embodiment may be disposed in a routing device, or may be a routing device itself. The data transmission device 500 may include at least one processor 510, for example, a CPU, a memory 520, at least one communication bus 530, and an operating system 540. The communication bus 530 is configured to implement connection and communication among these apparatuses. The memory 520 may include a high-speed RAM memory, and may further include a non-volatile memory (non-volatile memory), for example, at least one magnetic disk memory. Optionally, the memory 520 may include at least one storage apparatus far away from the processor 510. The operating system 540, including various programs, is configured to implement various basis services and process hardware-based tasks.

### Specifically:

The processor 510 may be configured to: after a bit error occurs in each transmission path, obtain a bit error rate of each transmission path; determine a sending cost of a corresponding transmission path according to the bit error rate of the each transmission path; and select a transmission path according to the sending cost of the each transmission path, to perform data transmission.

Further, the processor 510 may be configured to detect a first bit error rate of receiving data in each transmission path; receive a second bit error rate sent by a peer device in each transmission path, where the second bit error rate is a bit error rate of receiving data by the peer device via each transmission path; and determine that a larger bit error rate of the first bit error rate and the second bit error rate of the each transmission path is the bit error rate of each transmission path.

Further, the processor 510 may be specifically configured to receive the second bit error rate sent by the peer device in each transmission path by means of a bidirectional forwarding detection message.

Further, the processor 510 may be specifically configured to perform adjustment processing for a sending cost of the each transmission path according to the bit error rate of the each transmission path, and determine the sending cost of each transmission path after the bit error occurs; and select a transmission path according to the sending cost of the each transmission path after the bit error occurs, to perform data transmission.

Further, the processor 510 may be specifically configured to determine a first transmission path with a bit error rate greater than a first threshold and a second transmission path with a bit error rate less than or equal to the first threshold among the transmission paths; perform adjustment processing for a sending cost of the first transmission path, determine a sending cost of the transmission path after the bit error occurs, and take a sending cost of the second transmission path before the bit error occurs as a sending cost of the second transmission path after the bit error occurs; and select a transmission path according to the sending cost of the each transmission path after the bit error occurs, to perform data transmission.

Further, the processor 510 may be specifically configured to determine a sending cost adjustment amount corresponding to a bit error rate of a transmission path according to a mapping relationship between the bit error rate and the sending cost adjustment amount; and determine a sending cost of the transmission path after the bit error occurs according to a sending cost of the transmission path before the bit error occurs and the sending cost adjustment amount of the transmission path.

Further, the processor 510 may be configured to: after the bit error rate of each transmission path is obtained, close a transmission path with a bit error rate greater than a second threshold among the transmission paths; and determine the sending cost of a corresponding transmission path according to a bit error rate of a transmission path which is in an ON state.

The data transmission device 500 provided by this embodiment may be used to execute the technical solution of the method embodiment shown in FIG. 1, FIG. 2, or FIG. 3, and implementation principles and technical effects thereof are similar, and details will not be described herein again.

An embodiment of the present invention further provides a data transmission system, which may include at least two data transmission devices that communicate with each other, where at least one data transmission device is the data transmission device shown in FIG. 4 or FIG. 5.

Based on the foregoing, in the data transmission method, device, and system provided by the embodiments of the present invention, in a situation where a bit error occurs in each data transmission path, bidirectional bit error rates of a transmission path are comprehensively considered, and a sending cost of the data transmission path is flexibly adjusted according to a size of a bit error rate, so that a data transmission path is selected preferentially by using the adjusted sending cost. Therefore, data transmission congestion is alleviated, and data transmission interruption is not easily caused.

The data transmission method, device, and system provided by the embodiments of the present invention are applicable to data transmission under all types of protocols, for example, data transmission under the IGP or the Border Gateway Protocol (Border Gateway Protocol, BGP for short).

Persons of ordinary skill in the art may understand that all or a part of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention rather than limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, as long as such modifications or replacements do not cause the essence of corresponding technical solutions to depart from the scope of the technical solutions of the embodiments of the present invention.

## Claims

1. A data transmission method, comprising:
after a bit error occurs in each transmission path, obtaining a bit error rate of the each transmission path;
determining a sending cost of a corresponding transmission path according to the bit error rate of the each transmission path; and
selecting a transmission path according to the sending cost of the each transmission path, to perform data transmission.

2. The method according to claim 1, wherein the obtaining a bit error rate of the each transmission path comprises:
detecting a first bit error rate of receiving data in the each transmission path;
receiving a second bit error rate sent by a peer device in the each transmission path, wherein the second bit error rate is a bit error rate of receiving data by the peer device via the each transmission path; and
determining that a larger bit error rate of the first bit error rate and the second bit error rate of the each transmission path is the bit error rate of the each transmission path.

3. The method according to claim 2, wherein the receiving a second bit error rate sent by a peer device in the each transmission path comprises:
receiving the second bit error rate sent by the peer device in the each transmission path by means of a bidirectional forwarding detection message.

4. The method according to any one of claims 1 to 3, wherein the determining a sending cost of a corresponding transmission path according to the bit error rate of the each transmission path comprises:
performing adjustment processing for a sending cost of the each transmission path according to the bit error rate of the each transmission path, and determining a sending cost of the each transmission path after the bit error occurs; and
the selecting a transmission path according to the sending cost of the each transmission path, to perform data transmission comprises:
selecting, according to the sending cost of the each transmission path after the bit error occurs, a transmission path to perform data transmission.

5. The method according to any one of claims 1 to 3, wherein the determining a sending cost of a corresponding transmission path according to the bit error rate of the each transmission path comprises:
determining a first transmission path with a bit error rate greater than a first threshold and a second transmission path with a bit error rate less than or equal to the first threshold among the transmission paths;
performing adjustment processing for a sending cost of the first transmission path, determining a sending cost of the first transmission path after the bit error occurs, and taking a sending cost of the second transmission path before the bit error occurs as a sending cost of the second transmission path after the bit error occurs; and
the selecting a transmission path according to the sending cost of the each transmission path, to perform data transmission comprises:
selecting a transmission path according to the sending cost of the each transmission path after the bit error occurs, to perform data transmission.

6. The method according to claim 4 or 5, wherein the adjustment processing for the sending cost comprises:
determining a sending cost adjustment amount corresponding to a bit error rate of a transmission path according to a mapping relationship between the bit error rate and the sending cost adjustment amount; and
determining a sending cost of the transmission path after the bit error occurs according to a sending cost of the transmission path before the bit error occurs and the sending cost adjustment amount of the transmission path.

7. The method according to any one of claims 1 to 6, wherein after the obtaining a bit error rate of the each transmission path, the method further comprises:
closing a transmission path with a bit error rate greater than a second threshold among the transmission paths; and
the determining a sending cost of a corresponding transmission path according to the bit error rate of the each transmission path comprises:
determining a sending cost of a corresponding transmission path according to a bit error rate of a transmission path which is in an ON state.

8. A data transmission device, comprising:
an obtaining module, configured to obtain a bit error rate of each transmission path after a bit error occurs in each transmission path;
a determining module, configured to determine a sending cost of a corresponding transmission path according to the bit error rate of the each transmission path; and
a selecting module, configured to select a transmission path according to a sending cost of each transmission path, to perform data transmission.

9. The device according to claim 8, wherein the obtaining module comprises:
a detecting unit, configured to detect a first bit error rate of receiving data in the each transmission path;
a receiving unit, configured to receive a second bit error rate sent by a peer device in the each transmission path, wherein the second bit error rate is a bit error rate of receiving data by the peer device via each transmission path; and
a determining unit, configured to determine that a larger bit error rate of the first bit error rate and the second bit error rate of each transmission path is the bit error rate of the each transmission path.

10. The device according to claim 9, wherein the receiving unit is specifically configured to:
receive the second bit error rate sent by the peer device in the each transmission path by means of a bidirectional forwarding detection message.

11. The device according to any one of claims 8 to 10, wherein the determining module is specifically configured to:
perform adjustment processing for a sending cost of the each transmission path according to the bit error rate of each transmission path, and determine a sending cost of the each transmission path after the bit error occurs; and
the selecting module is specifically configured to:
select a transmission path according to the sending cost of the each transmission path after the bit error occurs, to perform data transmission.

12. The device according to any one of claims 8 to 10, wherein the determining module is specifically configured to:
determine a first transmission path with a bit error rate greater than a first threshold and a second transmission path with a bit error rate less than or equal to the first threshold among the transmission paths; perform adjustment processing for a sending cost of the first transmission path, determine a sending cost of the transmission path after the bit error occurs, and take a sending cost of the second transmission path before the bit error occurs as a sending cost of the second transmission path after the bit error occurs; and
the selecting module is specifically configured to:
select a transmission path according to the sending cost of each transmission path after the bit error occurs, to perform data transmission.

13. The device according to claim 11 or 12, wherein the determining module is specifically configured to:
determine a sending cost adjustment amount corresponding to a bit error rate of a transmission path according to a mapping relationship between the bit error rate and the sending cost adjustment amount; and determine a sending cost of the transmission path after the bit error occurs according to a sending cost of the transmission path before the bit error occurs and the sending cost adjustment amount of the transmission path.

14. The device according to any one of claims 8 to 13, further comprising:
a transmission path closing module, configured to: after the obtaining module obtains the bit error rate of each transmission path, close a transmission path with a bit error rate greater than a second threshold among the transmission paths; and
the determining module is specifically configured to determine the sending cost of a corresponding transmission path according to a bit error rate of a transmission path which is in an ON state.

15. A data transmission system, comprising: at least two data transmission devices that communicate with each other, wherein at least one data transmission device is the data transmission device according to any one of claims 8 to 14.
